# EUROPEAN PATENT APPLICATION

(11) **EP 1 906 314 A1**
(43) Date of publication of application: **02.04.2008**
(21) Application number: 06020562.2
(22) Date of filing: 29.09.2006
(51) Int. Cl.: G06F 17/30

(54) **System and method for providing a location based weblog**

(71) Applicant: Koninklijke KPN N.V., 2516 CK The Hague (NL)
(72) Inventor: Driessen, Wieneke, 3533 TG Utrecht (NL); van Elk, Yuri Sebastiaan Peter Maria, 2632 EH Nootdorp (NL); Visscher, Merel, 3511 AN Utrecht (NL)
(74) Representative: Wuyts, Koenraad Maria

(57) **Abstract**

A system and method for creating location based weblogs is disclosed. The system obtains location information about a wireless device of the owner of the weblog at a certain point in time and presents this information on the weblog of the user. This information can be combined with information with regard to the actual use of the wireless device at a certain point in time.

## Description

### FIELD OF THE INVENTION

The present invention relates to the field location based services and more specifically to the use of location information for creating weblogs.

### BACKGROUND OF THE INVENTION

A weblog, which is often abbreviated to "blog", is a type of website where the owner can store all kinds of information. Sometimes weblogs are related to a specific topic, but nowadays the use of weblogs for sharing personal experiences and thoughts with friends, family and total strangers is very popular. This information can be provided in different media formats, e.g. text, sound, pictures or video. Usually information on a weblog is structured in a time based, reverse chronological, order, taking the format of an old fashioned paper based log book, journal or diary. This poses the problem that the information is rather unstructured, and a specific piece of information is hard to find.

Weblogs can be created, updated and viewed by using an Internet enabled device like e.g. a personal computer, but also a wireless or mobile device like e.g. a mobile phone or a PDA. The use of mobile devices for updating a user's weblog is growing rapidly, because people usually have their mobile devices with them wherever they go. For a lot of people the use of their mobile device is closely linked to their personal life. They use their mobile device for communicating with their friends, and like with their weblog sharing their experiences. Information about the use of a mobile device is partly stored in the memory of the device and partly in the systems of the network operator and service provider. Information stored about the use of a mobile device comprises for instance starting time and duration of incoming and outgoing calls, voicemail messages, text messages and also location information of the mobile device at a certain points in time. At present the location information is used to provide the user of the mobile device with location based services, e.g. by presenting him with information about a nearby touristic event, or the nearest pizzeria. This information is not stored in a user friendly structured way and is not easily available.

### AIM OF THE INVENTION

It is an object of the invention to eliminate the drawbacks of the prior art and to provide a method and system for using information about the use of a mobile user device for creating a location based weblog.

### SUMMARY OF THE INVENTION

According to a first aspect of the invention a method for creating and updating location based blogs is provided comprising the steps of obtaining location information with regard to the location of a wireless user terminal at a certain point in time and presenting the location information on the blog of the user of the wireless user terminal. This has the advantage that the information on the blog of the user can be better structured that the usual chronological order. The wireless user terminal can e.g. be a mobile telephone, a PDA, but also a laptop with communication means.

In an advantageous embodiment the method also comprises the steps of obtaining usage data with regard to the use of the wireless user terminal, the usage data comprising at least a time stamp indicating a certain point in time and a description of the use of the wireless user terminal at that certain point in time and presenting the usage data on the blog of the user of the wireless user terminal in relation to the location information at that certain point in time. The usage data can for instance represent a call or a messages received by the user, a call or message placed by the user but also the fact that a picture wat taken by the user with his wireless terminal.

Preferably the location information is presented on the blog graphically, taking the form of for example a map.

The location of the wireless user terminal at different points in time can be represented on the map as an itinary.

According to yet another embodiment the usage data not only comprises information with regard to the type of use of the wireless user device but also the content of a message sent or received by the user of the wireless user terminal. This has the advantage that the content of the messages can be linked to a certain location. The content of a message sent or received by the user can comprise text, pictures, sound or video. The content can also relate to a picture taken by the user with his wireless terminal at that location.

The location information can be obtained from different sources. According to one embodiment of the method the location information is obtained from the wireless telecommunication network to which the wireless user device is connected, the location information can be derived from the Cell-ID of the base station to which the wireless user terminal is connected. This Cell-ID information is already present in the network. This has the advantage that no addition measures have to be taken to obtain location information, and that the Cell-ID information that is present in the network for technical reasons can be used for commercial purposes.

According to yet another embodiment the location information is obtained from the wireless user device, wherein the wireless user device comprises a GPS module for determining the location of the wireless user device.

According to an advantageous embodiment the wireless user terminal is a mobile phone, the location information is presented on a geographical map, the usage data comprises text, pictures, voice messages and video sequences created with or received by the mobile phone at the time the user of the mobile phone was present on the location identified by the location information on the geographical map.

According to another aspect of the invention a system for creating and updating a location based blog is disclosed, the system comprising a location module for obtaining location information with regard to the location of a wireless user terminal at a certain point in time and a presentation module for presenting the location information on the blog of the user of the wireless user terminal.

In an advantageous embodiment the system also comprises a usage data module for obtaining usage data with regard to the use of the wireless user terminal, the usage data comprising at least a time stamp indicating a certain point in time and a description of the use of the wireless user terminal at that certain point in time. The location information can be presented on the blog graphically. The usage data can also comprise the content of a message sent or received by the user of the wireless user terminal. The content of a message sent or received by the user can comprise text, pictures, sound or video. The location information can be obtained from the wireless telecommunication provider to which the wireless user device is connected or from the wireless user device, when the wireless user device comprises a GPS module for determining the location of the wireless user device.

### BRIEF DESCRIPTION OF THE DRAWING FIGURE

Figure 1 depicts a system according to the invention.
Figure 2 depicts another system according to the invention
Figures 3 and 4 provide examples of a weblog created with the method or system according to the invention.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

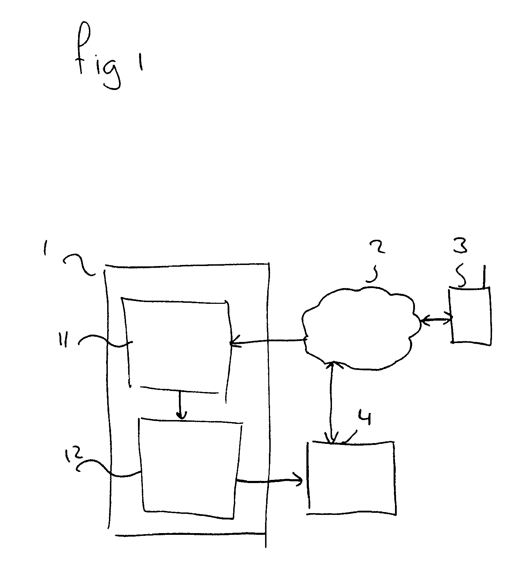

FIG.1 shows a system (1) according to the invention comprising two modules. The first module (11) is a location module. This module obtains location information about a wireless user terminal at a certain point in time. The location module provides this information to the presentation module (12), which presents the location information on the weblog (4) of the user of the wireless device (3).
The location module is connected to the wireless network (2) to which the wireless user device (3) is connected. The location module can obtain the information about the location of the wireless terminal at a certain point in time in several different ways. The location information can be derived from the information that is already stored by the telecommunication network operator for billing purposes. This information is usually stored in so called Call Detail Records (CDR). A CDR is created every time a wireless device is used, e.g. to place a call or sent an email or text message. A CDR can comprise an identification of the so called base station of the wireless network to which the wireless user device is connected at the time of call set up. A disadvantage of obtaining location information from the CDR's is that If the user does not carry out an action that needs to be paid for by the user, there is no CDR created and hence the location of the wireless device and thus the user is unknown. A solution might be to program the wireless device to send an SMS message periodically, for example every hour, to guarantee that the location of the wireless device and the user is known at predefined time intervals. Still a disadvantage of using the CDR information is that it is always based on the CellID of the base station. Often one base station can have a rather big coverage, which means that the precision of the location information is not very accurate. This might be accurate enough for a lot of applications, but if it is necessary to trace the location of the user very accurate, the location module can also derive the location information from a system in the wireless telecommunication network that is usually used to provide location based services (LBS). These systems usually refine the location information by using information from more than one basestation. In yet another embodiment of the system and method according to the invention the location module obtains the location information from the wireless user device itself. This can be done if the wireless device comprises a Global Positioning System (GPS) module. The advantage of using GPS for determining the location of the user device is that this information is very accurate. The location module can either obtain the location information directly, which means that the location information in combination with a time stamp is sent to the location module e.g. at regular intervals, or as soon as the user changes location. Another option is that the location module can ask a location provisioning system for the location of the user at a certain point in time in the past. This is only possible if the location provisioning system in the network maintains a location history.

After the location module has obtained the location information about the wireless user device at a certain point in time, the location module provides the information to the presentation module. The presentation module can provide the location information to the actual weblog of the user of the wireless device. This can be a known weblog creation application. The location can be provided in the form of plain text, representing the coordinates of the location or e.g. the address of the base station. In a preferred embodiment the location information is presented on a map or even a satellite image. The people using the weblog of the user of the wireless device can be provided with the possibility to zoom in and out.

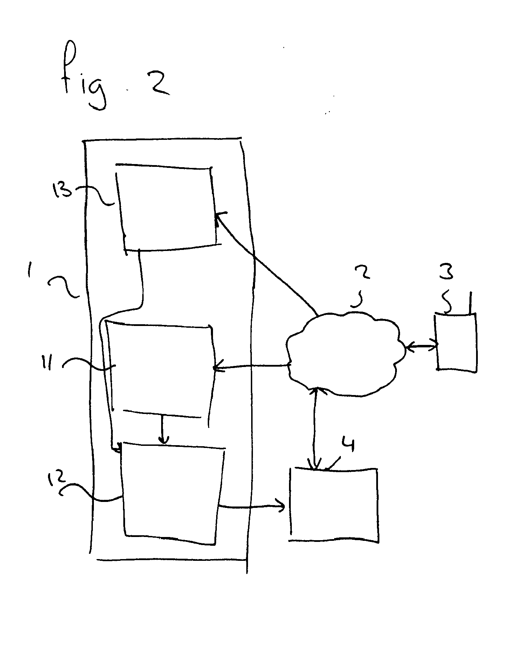

In a preferred embodiment depicted in Figure 2 the system also comprises a usage data module (13). This module obtains information with regard to the use of the wireless user device. It can e.g. obtain information about calls that were placed with or received by the mobile phone. This information can comprise a time stamp, indication of the duration of the call and the phone number of the other party. All kinds of information can be derived from the phone number or the other party, like the name and address but also a picture. The usage data module can also obtain information about messages placed and received by the mobile phone. This information can also contain the content of the messages. This content can also comprise pictures or video sequences. The usage data module is connected to the network. The usage data can be obtained from the network operator or service provider. Additionally the information can also be obtained from the wireless device itself. This makes it possible to relate for instance a picture which was taken and stored on the device at a certain point in time with the location of thw wireless device at that certain point in time. Or to play an MP3 file related to the location of the device when the MP3 was stored.

So in daily use, the user of the wireless device is traveling around, making phonecalls, receiving messages, taking pictures etc. Pictures and messages can be stored on his wireless device. Details about calls placed and received will be stored partly on the wireless device, but also in the network, especially if it concerns activities billed to either the receiver or sender of the call or message. The location of the wireless device is registered and stored in any of the above identified ways. The information about the location and the information with regard to the use of the wireless device can be obtained by the system according to the invention. This can be done periodically, either automatically or on request of the user, or continually. The location information and data with regard to the use of the wireless device can than be presented on the weblog of the user of the wireless device.

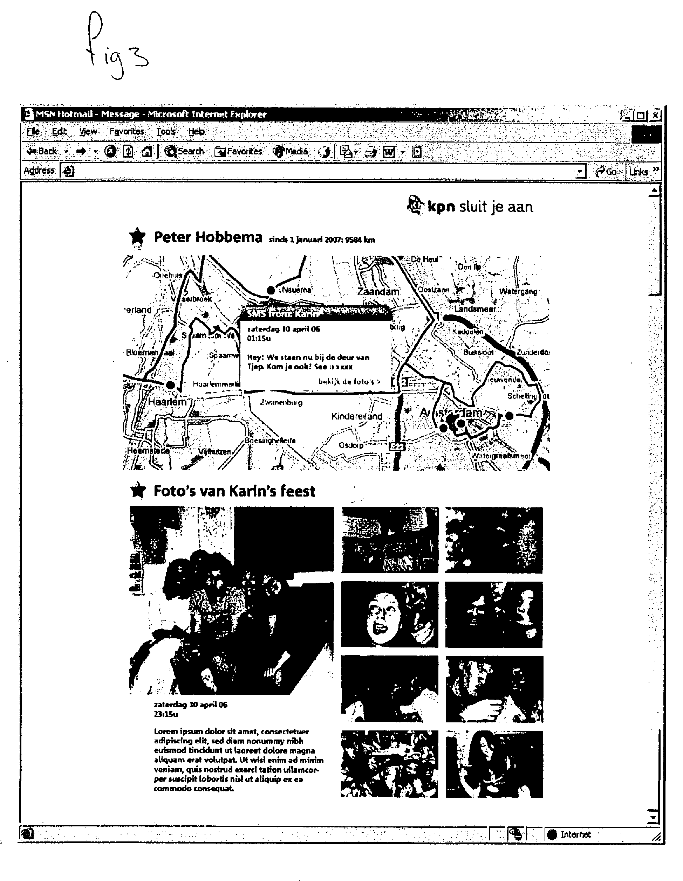

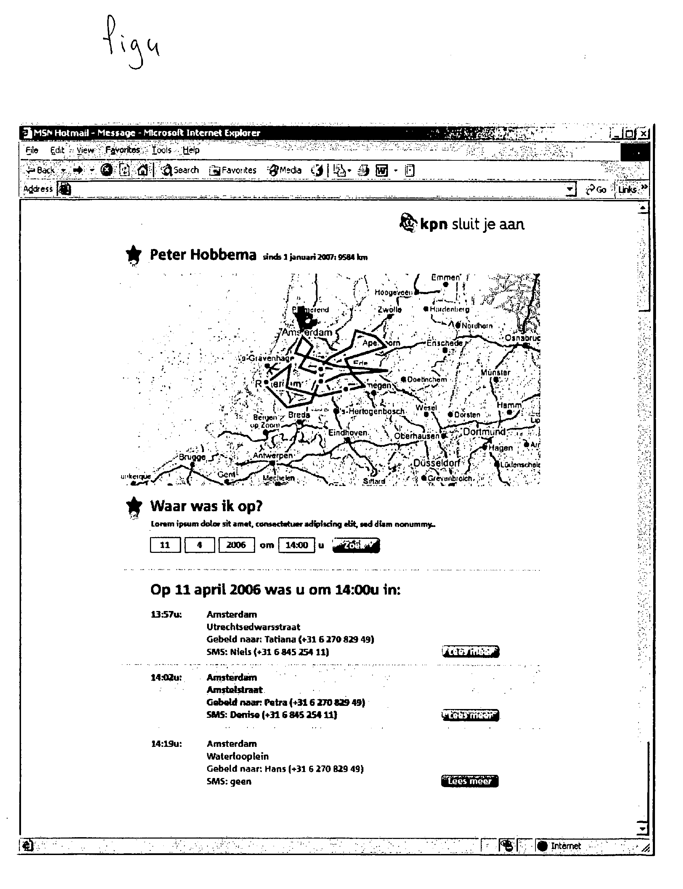

People consulting the weblog of the user of the wireless device can consult the weblog using any internet enabled device, like a personal computer at home or an internet enabled wireless device. In a preferred embodiment the weblog of the user will look like a map with spots indicating where the user has been, the spots forming an itinerary on the map. Icons can be used to indicate that for a specific spot more information is available, the user can click on the icons and be presented tekst, pictures or sound related to that location and that point in time. As with known weblogs the user can be provided to possibility to add comments and information. The owner of the weblog can also classify the information indicating which users have access to what information. Two examples of how a weblog created according to the invention could look like are provided in figures 3 and 4.

## Claims

1. A method for creating and updating location based blogs comprising the steps of:
obtaining location information with regard to the location of a wireless user terminal at a certain point in time;
presenting the location information on the blog of the user of the wireless user terminal.

2. A method according to claim 1 also comprising the steps of:
obtaining usage data with regard to the use of the wireless user terminal, the usage data comprising at least a time stamp indicating a certain point in time and a description of the use of the wireless user terminal at that certain point in time;
presenting the usage data on the blog of the user of the wireless user terminal in relation to the location information at that certain point in time.

3. A method according to claim 1-2 wherein the location information is presented on the blog graphically.

4. A method according to claim 1-3 wherein the location information with regard to the location of a wireless user terminal at a series of points in time forms an itinerary on the graphical representation.

5. A method according to claim 1-4 wherein the usage data also comprises the content of a message sent or received by the user of the wireless user terminal.

6. A method according to claim 5 wherein the content of a message sent or received by the user comprises text, pictures, sound or video.

7. A method according to claim 1-6 wherein the location information is obtained from the wireless telecommunication network to which the wireless user device is connected.

8. A method according to claim 1-7 wherein the location information obtained from the wireless telecommunication network is derived from the Cell-ID of the base station to which the wireless user terminal is connected.

9. A method according to claim 1-8 wherein the location information is obtained from the wireless user device, and wherein the wireless user device comprises a GPS module for determining the location of the wireless user device.

10. A method according to claim 1-9 wherein the wireless user terminal is a mobile phone, the location information is presented on a geographical map, the usage data comprises text, pictures, voice messages and video sequences created with or received by the mobile phone at the time the user of the mobile phone was present on the location identified by the location information on the geographical map.

11. A system for creating and updating a location based blog comprising:
A location module for obtaining location information with regard to the location of a wireless user terminal at a certain point in time;
A presentation module for presenting the location information on the blog of the user of the wireless user terminal.

12. A system according to claim 11 also comprising:
A usage data module for obtaining usage data with regard to the use of the wireless user terminal, the usage data comprising at least a time stamp indicating a certain point in time and a description of the use of the wireless user terminal at that certain point in time.

13. A system according to claim 11-12 wherein the location information is presented on the blog graphically.

14. A system according to claim 11-13 wherein the usage data also comprises the content of a message sent or received by the user of the wireless user terminal.

15. A system according to claim 14 wherein the content of a message sent or received by the user comprises text, pictures, sound or video.

16. A system according to claim 11-15 wherein the location information is obtained from the wireless telecommunication provider to which the wireless user device is connected.

17. A system according to claim 11-16 wherein the location information is obtained from the wireless user device, and wherein the wireless user device comprises a GPS module for determining the location of the wireless user device.
